(19) **Europäisches Patentamt**
**European Patent Office**
**Office européen des brevets**

(11) **EP 2 256 162 B1**

(12) **EUROPEAN PATENT SPECIFICATION**

(45) Date of publication and mention
of the grant of the patent:
**28.12.2016 Bulletin 2016/52**

(21) Application number: **09719403.9**

(22) Date of filing: **10.03.2009**

(51) Int Cl.:
*C08L 59/00* *(2006.01)*    *C08K 5/00* *(2006.01)*
*C08K 5/20* *(2006.01)*    *C08K 5/3492* *(2006.01)*

(86) International application number:
**PCT/JP2009/054541**

(87) International publication number:
**WO 2009/113536 (17.09.2009 Gazette 2009/38)**

(54) **POLYACETAL RESIN COMPOSITION**

POLYACETALHARZZUSAMMENSETZUNG

COMPOSITION DE RÉSINE DE POLYACÉTAL

(84) Designated Contracting States:
**AT BE BG CH CY CZ DE DK EE ES FI FR GB GR
HR HU IE IS IT LI LT LU LV MC MK MT NL NO PL
PT RO SE SI SK TR**

(30) Priority: **11.03.2008 JP 2008061666**

(43) Date of publication of application:
**01.12.2010 Bulletin 2010/48**

(73) Proprietor: **Mitsubishi Gas Chemical Company,
Inc.
Tokyo 100-8324 (JP)**

(72) Inventors:
• **SUNAGA, Daisuke**
**Yokkaichi-shi**
**Mie 510-0886 (JP)**
• **MIYOSHI, Tsutomu**
**Yokkaichi-shi**
**Mie 510-0886 (JP)**

(74) Representative: **Müller-Boré & Partner
Patentanwälte PartG mbB
Friedenheimer Brücke 21
80639 München (DE)**

(56) References cited:
**JP-A- 3 091 555        JP-A- 7 173 368
JP-A- 11 043 583      JP-A- 2000 007 884
JP-A- 2005 225 973   JP-A- 2005 272 707
JP-A- 2007 084 714   JP-A- 2007 145 979
JP-A- 2008 127 556   JP-A- 2008 156 504
US-A1- 2003 105 199  US-B1- 6 211 268**

Remarks:
The file contains technical information submitted after
the application was filed and not included in this
specification

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 256 162 B1

**Description**

TECHNICAL FIELD

The present invention relates to a method of producing polyacetal resin composition comprising a polyacetal resin, an amine-substituted triazine compound and an aliphatic compound.
The polyacetal composition has an excellent creep resistance, a high mold releasability, and a good thermal stability exhibited when being kneaded or molded.

BACKGROUND ART

Polyacetal resins are engineering plastic materials having a good balance of mechanical properties (friction/abrasion resistance, chemical resistance, creep resistance, size stability), a very high fatigue resistance and a low water absorbency. Owing to such characteristics, polyacetal resins are recently used for, for example, resin parts which are used for interior components of automobiles, interior components of houses and the like (heat/water mixing plugs, etc.), parts of clothing (fasteners, belt buckles, etc.), building materials (pipe and pump components, etc.) and electric components (gears, etc.), and so are increased in the demand.
However, as the uses thereof are widened, resin components having improved properties as materials are desired and are produced. For example, polyacetal resins are used for fuel components owing to an excellent chemical resistance thereof. However, when being always subjected to a constant pressure or always subjected to a stress by a pipe or the like, for example, when being used for fuel components, polyacetal resins have a serious problem of causing creep rupture in a short time even under a low stress. For this reason, a polyacetal resin composition which has a high toughness, especially a good creep resistance, and is produced at low cost has been strongly desired.
In response to such a desire, various polyacetal resin compositions have conventionally been studied in an attempt to improve the creep resistance thereof. For example, a polyacetal resin composition comprising a polyacetal resin, glass fiber, conductive carbon and a polyurethane-based resin has been proposed (see Patent Document 1).
Also, the following polyacetal resin composition, which is a mixture of polyoxymethylene copolymers as two components having different melt indices, has been proposed (see Patent Document 2). This polyacetal resin comprises 20 to 80% by weight of a high melt index component having a melt index of 300 or less, and the value obtained by dividing the melt index of the high melt index component by the melt index of a low melt index component is adjusted to 15. However, even these methods cannot sufficiently improve the creep resistance, mold releasability or thermal stability.
Patent Document 1: Japanese Laid-Open Patent Publication No. 11-1603
Patent Document 2: Japanese Laid-Open Patent Publication No. 2001-234025

DISCLOSURE OF THE INVENTION

The present invention has an object of providing a method of producing a polyacetal resin composition which solves the above-described problems and is significantly improved in the creep resistance, mold releasability and thermal resistance without impairing advantageous properties of polyacetal resins such as a high rigidity and an excellent moldability; and a method for producing the same.
As a result of accumulating active studies in order to solve the above-described problems, the present inventors found that at least one of the problems of the conventional art can be solved by a polyacetal resin composition comprising a polyacetal resin, a specific amount of amine-substituted triazine compound and a specific amount of aliphatic compound, wherein the amine-substituted triazine compound is melamine, and wherein the aliphatic compound is ethylene bis(stearamide). The present inventors also found that a polyacetal resin composition in which a total amount of alkali metal and alkali earth metal is 50 ppm or less is excellent in the creep resistance, mold releasability and thermal stability. Thus, the present invention has been completed.
The present invention is directed to a method for producing a polyacetal resin composition, comprising adding, to 100 parts by weight of a polyacetal resin, 0.05 to 0.15 part by weight of an (B) amine-substituted triazine compound and 0.10 to 0.20 part by weight of an (C) aliphatic compound; and heating and thus melting the resultant substance at a temperature in the range of 210 to 230°C while deairing the resultant substance at a reduced pressure of 20.7 to 26.7 kPa, wherein the (B) amine-substituted triazine compound is melamine, and wherein the (C) aliphatic compound is ethylene bis(stearamide).
In the present invention, an embodiment in which the deairing is performed at a reduced pressure of 21.3 kPa is preferable.

A polyacetal resin composition in a preferable embodiment of the present invention is significantly improved in the creep resistance, mold releasability and thermal stability. Owing to such excellent performances, the polyacetal resin composition is preferably usable for interior components of automobiles, interior components of houses and the like (heat/water mixing plugs, etc.), parts of clothing (fasteners, belt buckles, etc.), building materials (pipe and pump components, etc.), electric components (gears, etc.), fuel components, and the like.

BEST MODE FOR CARRYING OUT THE INVENTION

Hereinafter, the present invention will be described in detail.

The (A) polyacetal resin used for the present invention is a polymer having, as a repeat structure, acetal structure-(-O-CRH-)$_n$ (where R represents a hydrogen atom or an organic group); and usually has the repeat structure in which R is a hydrogen atom, namely, oxymethylene group (-CH$_2$O-), as a main structural unit. A polyacetal resin used for the present invention is not limited to an acetal homopolymer formed only of this repeat structure and may be a copolymer (for example, block copolymer), a terpolymer or the like further containing at least one type of repeat structural unit other than the oxymethylene group; and also may have a branched or crosslinked structure instead of a linear structure.

Examples of the structural unit other than the oxymethylene group include oxyalkylene groups which have a carbon number of 2 or greater and 10 or less and may be branched, such as oxyethylene group (-CH$_2$CH$_2$O-), oxypropylene group (-CH$_2$CH$_2$CH$_2$O-), oxybutylene group (-CH$_2$CH$_2$CH$_2$CH$_2$O-) and the like. Among these, oxyalkylene groups which have a carbon number of 2 or greater and 4 or less and may be branched are preferable, and oxyethylene group is especially preferable. The content of the oxyalkylene group used as the structural unit other than the oxymethylene group is, with respect to the polyacetal resin, preferably 0.1% by weight or greater and 20% by weight or less, and more preferably 0.5% by weight or greater and 15% by weight or less.

A method for producing the polyacetal resin is optional, and any conventionally known method is usable. For example, a polyacetal resin having, as a structural unit, an oxymethylene group and an oxyalkylene group having a carbon number of 2 or greater and 4 or less may be produced by copolymerizing the following: a cyclic oligomer of the oxymethylene group such as, for example, a trimer or a tetramer of formaldehyde (trioxane or tetraoxane), and a cyclic oligomer containing an oxyalkylene group having a carbon number of 2 or greater and 4 or less, such as ethylene oxide, 1,3-dioxolane, 1,3,6-trioxolane, 1,3-dioxepane or the like. The polyacetal resin used for the present invention is preferably a copolymer of a cyclic oligomer such as trioxane, tetraoxane or the like and ethylene oxide or 1,3-dioxolane; and more preferably a copolymer of trioxane and 1,3-dioxolane.

The amount of (B) melamine to be incorporated is, with respect to 100 parts by weight of the polyacetal polymer, preferably 0.05 to 0.15 part by weight and more preferably 0.07 to 0.12 part by weight.

The polyacetal resin composition according to the present invention comprises (A), (B) and (C) mentioned above as indispensable components, and may also include any of known additives and/or fillers in the range in which the object of the present invention is not spoiled. Examples of the additives include lubricant, antistatic agent, ultraviolet absorber, photostabilizer, coloring dye/pigment, and the like. Examples of the fillers include glass fibers, glass flakes, glass beads, talc, mica, calcium carbonate, potassium titanate whisker, and the like.

A method for producing the polyacetal resin composition according to the present invention is characterized in that, when the components (A) through (C) and other components used when necessary are mixed and kneaded, these components are heated to be melted at a temperature in the range of 210 to 230°C while being deaired at a reduced pressure of 20.7 to 26.7 kPa. Especially preferably, the deairing is performed at a reduced pressure of 21.3 kPa.

Specifically, for example, to 100 parts by weight of the polyacetal resin, 0.05 to 0.15 part by weight of the (B) amine-substituted triazine compound and 0.10 to 0.20 part by weight of the (C) aliphatic compound are mixed at the same time or in an optional order. When necessary, other resin additives or the like are incorporated. Then, these components are mixed by a tumbler-type blender or the like. The obtained mixture is melted and kneaded and then extruded in the form of a strand by a monoaxial or a biaxial extruder. When being extruded, the mixture is heated to be melted at a temperature in the range of 210 to 230°C while being deaired at a reduced pressure of 20.7 to 26.7 kPa (preferably at a reduced pressure of 21.3 kPa). Then, the mixture is pelletized. Thus, a polyacetal resin composition having a desired composition can be obtained.

The polyacetal resin composition according to the present invention can be molded in accordance with a known molding method of polyacetal resin. Molded items containing the polyacetal resin composition according to the present invention include various products which are known as being formed of a polyacetal resin, including materials such as pellets, round rods, thick boards and the like, sheets, tubes, various types of containers, various types of components of mechanical, electric, automobile, building and other parts, and the like.

Examples

Hereinafter, the present invention will be described in more detail by way of examples.

<Examples 1 to 10; comparative examples 1 to 8>

The (A) polyacetal resin, the (B) amine-substituted triazine compound and the (C) aliphatic compound of the amounts and the types shown in Tables 1 and 2 were mixed, heated to be melted at a temperature in the range of 210 to 230°C while being deaired at a reduced pressure of 21.3 kPa, and then formed into pellets by a biaxial extruder. The obtained pellets were evaluated. In Tables 1 and 2, the "comonomer content" is the amount (parts by weight) of the comonomer (1,3-dioxolane) reacted with 100 parts by weight of trioxane. The amounts of the other additives are represented with the amounts (parts by weight) with respect to 100 parts by weight of the polyacetal resin obtained from trioxane and 1,3-dioxolane.

The creep resistance, fuel resistance, mold contamination, yellow discoloration, and thermal stability were evaluated as follows.

(1) Creep test

Using a creep tester produced by Toyo Seiki, a molded piece of 3 mm (D) x 4 mm (W) x 75 mm (L) was subjected to a stress of 20 MPa at 80°C in the air, and the creep rupture time was measured.

(2) Fuel resistance

A dumbbell-type molded piece immersed in the following fuels at 65°C for 2000 hours was subjected to a tensile test in accordance with ISO 527-1 and 2, and the fuel resistance was evaluated with the strength retaining ratio after the immersion with respect to the strength before the immersion.

    Fuel (1): Toluene/isooctane = 60 wt.%/40 wt.%
    Fuel (2): Fuel (1)/ethanol = 70 wt.%/30 wt.%

(3) Mold contamination, yellow discoloration

The mold contamination was evaluated with the amount of the contaminants adhering to the mold after 400 shots of molding were performed at a cylinder temperature of 200°C and a mold temperature of 35°C, by stages 1 to 5 as follows.

Yellow discoloration was evaluated with the yellow discoloration degree of a piece molded at a cylinder temperature of 240°C and a mold temperature of 80°C, by stages 1 to 5 as follows.

Expression 1

|  | 1 | 2 | 3 | 4 | 5 |  |
|---|---|---|---|---|---|---|
| Mold contamination: low degree | ← | | | | → | high degree |
| Yellow discoloration: low degree | ← | | | | → | high degree |

(4) Thermal stability

A molded piece was retained in a molding apparatus at a cylinder temperature at 240°C, and the time until foaming traces were exhibited on a surface of the molded piece was measured. The thermal stability was evaluated every 12 minutes, up to 72 minutes.

Table 1

| | Comonomer content | Mx | EBS | St-Ca | PEG | PW | Creep rupture time (20MPa) | Fuel resitance | | Mold contamination | Yellow discoloration | Thermal stability |
|---|---|---|---|---|---|---|---|---|---|---|---|---|
| | | | | | | | | Fuel(1) | Fuel(2) | | | |
| | Parts by weight | Parts by weight | | | | | Hours | % | % | - | - | Minutes |
| 1 | 2.5 | 0.05 | 0.15 | | | | 1000 | 93 | 87 | 1 | 1 | 72 |
| 2 | 2.5 | 0.1 | 0.15 | | | | 1125 | 93 | 87 | 1 | 1 | 72 |
| 3 | 2.5 | 0.15 | 0.15 | | | | 975 | 92 | 86 | 1 | 1 | 72 |
| 4 | 2.5 | 0.1 | 0.2 | | | | 825 | 93 | 87 | 1 | 1 | 72 |
| 5 | 2.5 | 0.1 | 0.1 | | | | 1050 | 93 | 87 | 1 | 1 | 72 |
| 6 | 2.5 | 0.1 | 0.1 | 0.01 | | | 800 | 91 | 85 | 1 | 2 | 60 |
| 7 | 2.5 | 0.1 | 0.1 | | 0.1 | | 750 | 90 | 80 | 1 | 1 | 72 |
| 8 | 2.5 | 0.1 | 0.1 | | | 0.05 | 1050 | 91 | 84 | 2 | 1 | 72 |
| 9 | 2.0 | 0.1 | 0.15 | | | | 1200 | 95 | 89 | 1 | 1 | 72 |
| 10 | 3.0 | 0.1 | 0.15 | | | | 975 | 89 | 84 | 1 | 1 | 72 |

EP 2 256 162 B1

| Comonomer: | 1,3-dioxolane (comonomer for the (A) polyacetal resin) |
| Mx: | Melamine ((B) amine-substituted triazine compound) |
| EBS: | Ethylenebisstearoamide ((C) aliphatic compound) |
| St-Ca: | Calcium stearate (additive) |
| PEG: | Polyethyleneglycol 20000P (additive) |
| PW: | Paraffin wax (additive) |

Table 2

| | Comonomer content | Mx | EBS | St-Ca | PEG | PW | Creep rupture time (20 MPa) | Fuel resistance | | Mold contamination | Yellow discoloration | Thermal stability |
|---|---|---|---|---|---|---|---|---|---|---|---|---|
| Comparative examples | | | | | | | | | | | | |
| | | | | | | | | Fuel (1) | Fusel (2) | | | |
| | Parts by weight | Parts by weight | | | | | Hours | % | % | - | - | Minutes |
| 1 | 2.5 | 0.025 | 0.15 | | | | 625 | 93 | 87 | 1 | 1 | 60 |
| 2 | 2.5 | 0.25 | 0.15 | | | | 650 | 91 | 85 | 2 | 1 | 36 |
| 3 | 2.5 | 0.1 | 0.25 | | | | 625 | 92 | 86 | 3 | 1 | 72 |
| 4 | 2.5 | 0.1 | | 0.15 | | | 750 | 89 | 83 | 4 | 4 | 36 |
| 5 | 2.5 | 0.1 | | | 0.15 | | 700 | 90 | 76 | 2 | 1 | 72 |
| 6 | 2.5 | 0.1 | | | | 0.15 | 900 | 90 | 83 | 5 | 1 | 72 |

Comonomer: 1,3-dioxolane (comonomer for the (A) polyacetal resin)
Mx: Melamine ((B) amine-substituted triazine compound)
EBS: Ethylenebisstearoamide ((C) aliphatic compound)
St-Ca: Calcium stearate (additive)
PEG: Polyethyleneglycol 20000P (additive)
PW: Paraffin wax (additive)

INDUSTRIAL APPLICABILITY

The polyacetal resin composition according to the present invention is preferably usable for, for example, interior components of automobiles, interior components of houses and the like (heat/water mixing plugs, etc.), parts of clothing (fasteners, belt buckles, etc.), building materials (pipe and pump components, etc.), electric components (gears, etc.), fuel components, and the like.

**Claims**

1.  A method for producing a polyacetal resin composition, comprising adding, to 100 parts by weight of a polyacetal resin, 0.05 to 0.15 part by weight of an (B) amine-substituted triazine compound and 0.10 to 0.20 part by weight of an (C) aliphatic compound; and heating and thus melting the resultant substance at a temperature in the range of 210 to 230°C while deairing the resultant substance at a reduced pressure of 20.7 to 26.7 kPa,
    wherein the (B) amine-substituted triazine compound is melamine, and wherein the (C) aliphatic compound is ethylene bis(stearamide).

2.  The method for producing a polyacetal resin composition according to claim 1, wherein the deairing is performed at a reduced pressure of 21.3 kPa.

**Patentansprüche**

1.  Verfahren zur Herstellung einer Polyacetalharzzusarmmensetzung, umfassend das Zugeben von 0,05 bis 0,15 Gew.-Teile einer (B) Amin-substituierten Triazinverbindung und 0,10 bis 0,20 Gew.-Teile einer (C) aliphatischen Verbindung zu 100 Gew.-Teilen eines Polyacetalharzes und das Erwärmen und anschließend das Schmelzen der resultierenden Substanz bei einer Temperatur in dem Bereich von 210 bis 230°C, während die resultierende Substanz bei einem verminderten Druck von 20,7 bis 26,7 kPa entlüftet wird,
    wobei die (B) Amin-substituierte Triazinverbindung Melamin ist, und wobei die (C) aliphatische Verbindung Ethylenbis(stearamid) ist.

2.  Verfahren zur Herstellung einer Polyacetalharzzusammensetzung gemäß Anspruch 1, wobei das Entlüften bei einem verminderten Druck von 21,3 kPa durchgeführt wird.

**Revendications**

1.  Procédé de production d'une composition de résine polyacétal, comprenant l'addition, à 100 parties en poids d'une résine polyacétal, 0,05 à 0,15 partie en poids (B) d'un composé de triazine substitué par une amine et 0,10 à 0,20 partie en poids (C) d'un composé aliphatique ; et le chauffage et donc la fusion de la substance obtenue à une température dans la plage de 210 à 230° C tout en désaérant la substance obtenue à une pression réduite de 20,7 à 26,7 kPa,
    dans lequel (B) le composé de triazine substitué par une amine est une mélamine, et dans lequel (C) le composé aliphatique est l'éthylène bis(stéaramide).

2.  Procédé de production d'une composition de résine polyacétal selon la revendication 1, dans lequel la désaération est réalisée à une pression réduite de 21,3 kPa.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 11001603 A

- JP 2001234025 A